# EUROPEAN PATENT SPECIFICATION

(11) **EP 3 542 627 B1**
(45) Date of publication and mention of the grant of the patent: **16.12.2020**
(21) Application number: 19164622.3
(22) Date of filing: 22.03.2019
(51) Int. Cl.: A01N 1/00

(54) **COMPOSITION FOR PRESERVATION OF CORPSES, METHOD OF OBTAINING SAID COMPOSITION AND ITS USE**
ZUSAMMENSETZUNG ZUR ERHALTUNG VON LEICHEN, VERFAHREN ZUR ERHALTUNG DER ZUSAMMENSETZUNG UND VERWENDUNG
COMPOSITION POUR CONSERVER LES CORPS, PROCEDE D'OBTENTION DE CETTE COMPOSITION ET SON UTILISATION

(30) Priority: 23.03.2018 ES 201830286
(43) Date of publication of application: 25.09.2019
(73) Proprietor: Soto Rodiño, Ramón Ángel, 36210 Pontevedra (Vigo) (ES); Empresa de Servicios Mortuorios de Vigo, S.A., 36210 Pontevedra (Vigo) (ES)
(72) Inventor: SOTO RODIÑO, Ramón Ángel, 36210 PONTEVEDRA (Vigo) (ES)
(74) Representative: Ungria López, Javier

(56) References cited:
- CN-A- 101 313 673
- CN-B- 102 349 498
- JP-A- 2006 089 462
- ERICH BRENNER: "Human body preservation - old and new techniques", JOURNAL OF ANATOMY., vol. 224, no. 3, 18 January 2014 (2014-01-18), pages 316-344, XP055306532, GB ISSN: 0021-8782, DOI: 10.1111/joa.12160

## Description

### Sector of the Art

The present invention, as expressed in the title of this specification, relates to a fluid for preserving corpses. Likewise, an object of the invention is the manufacture and the use thereof as an agent for preserving corpses.

### Background of the invention

The thanatopraxy of corpses relates to the technique of preserving corpses to display the lifeless body with a given consistency. Said technique brings together a series of practices the object of which is to leave the body of a deceased person with the best visual appearance possible, complying with a series of specific aesthetic standards, and to furthermore delay the decomposition process for the first 48 to 72 hours, which is the time that lapses from the time of death until the incineration or burial.

The most common preservation methods are:
1. Using cold to delay putrefaction, by means of the artificial drop in temperature;
2. Applying chemical products for the same purpose.

Regarding the second method of preserving corpses, the most widespread technique consists of drawing out the volume of blood and emptying gases and fluids from the chest and abdominal cavities, and a subsequent injection of 6 to 10 litres of formol as a biocidal liquid.

Nevertheless, although the use of the formol is very widespread due to its high disinfectant and bactericidal capacity, there is a trend leaning towards not using said compound since it has been found that formol has a high risk for human health given its high carcinogenicity/mutagenicity.

On this basis, the law is leaning towards a more restricted use of said product for the preparation and preservation of corpses. Although there is not one single European regulation, in some countries such as Belgium, Denmark, Netherlands, Luxembourg, Scandinavia, it is forbidden to use formol in the preparation of corpses, except in cases of repatriation to certain countries.

The following documents can be mentioned as background from the state of the art:
Patent application MX 2012008609 describes a composition for the treatment of corpses which is characterised in that it contains an anticoagulant. Said composition further comprises: glycerin; methanol, phenic acid, boric acid; EDTA disodium salt; potassium nitrate; martacyl red, bidistilled water; and formaldehyde in suitable amounts mixed under normal operating conditions.

European patent application EP 2306816 describes a composition for the treatment of corpses comprising polyoxymethylene (POM), also referred to as acetal, polyacetal and polyformaldehyde, as an essential ingredient.

Also, patent application CN 102349497 describes a composition for the treatment of corpses comprising a mineral oil, alkyl benzoate, dodecyl trimethyl ester acid, an olive oil ester, glycerol, ethanol and a preserving solution.

Patent application CN101313673 describes a composition for the treatment of corpses comprising glycerin, ethanol, propionic acid, hexamethylenetetramine, 5-chloro-2-methyl-4-isothiazolin-3-one, and peppermint oil. Based on the solutions for the treatment of corpses, it would be desirable to have a chemical solution that is capable of ensuring effective preservation that lasts for a time longer than 72 hours, and which does not comprise formaldehyde or the derivatives thereof in its composition due to their high toxicity.

The object of the present invention, unlike the products described in the state of the art, is a new product for the treatment of corpses characterised in that it is a composition which does not comprise formaldehyde or the derivatives thereof, and which, because of its components, is more effective compared to other products for the preservation of corpses available today. Also, the claimed product has a series of additional advantages derived from the very composition thereof, achieving a triple-acting with a synergistic effect, that is, disinfectant, antiseptic and conditioning.

### Description of the invention

In this manner, a first object of the invention is a fluid composition for the preservation of corpses characterised in that it consists of, in percentage by weight:
(a) from 2.3 to 2.5% of hexamethylenetetramine, also known as urotropin, which is a water-soluble organic heterocyclic compound. This compound performs the functions of conserving and disinfecting tissues;
(b) from 1.4 to 1.6% of pure glycerin soap, which is alcohol, the function of which is to disinfect like any other alcohol, but it mainly stands out for preventing hydrolysis of the skin, providing extra care and accentuating its "natural" appearance;
(c) from 0.4 to 0.6% of sodium bicarbonate, which is a water-soluble mineral that facilitates the disinfection function of the rest of the components of the composition object of the invention, furthermore, in the case of being perfused by means of a trocar in the internal cavities of the body, it prevents bacterial-mitotic proliferation;
(d) from 11.3 to 12.1% of ethyl alcohol, which has the function of disinfecting the composition object of the invention;
(e) and the necessary amount of distilled water in a volume until it reaches 100% of the formulation.

The claimed composition is suitable for the treatment of corpses which must be preserved in the first time periods established under the Mortuary Sanitary Law, which span from the time of death and up to a maximum of 96 hours.

Any person skilled in the art understands that the necessary amount of distilled water is given in volume.

It should be pointed out that hexamethylenetetramine is used in the present invention, the use of which as a preserving agent is very widespread in the food industry. Said component in combination with sodium bicarbonate prevents decomposition processes of the internal tissues, and it also delays the proliferation of microorganisms responsible for putrefaction, conferring the claimed composition with preserving efficacy. This high preserving efficacy, together with the disinfecting capacity of ethyl alcohol gives rise to a surprising effect, since the corpses to which the claimed composition has been applied remained in good conditions for periods exceeding 96 hours, which demonstrates its high efficacy compared to other commercial compositions. This efficacy stands out even further taking into account that the present composition does not comprise formaldehyde.

Furthermore, glycerin, in addition to disinfecting as it is an alcohol, acts as a wetting agent, giving the skin a hydrated and natural appearance. In the context of the present invention, "natural" appearance of the skin refers to a visually pleasing appearance, giving the skin a hydrated and smooth appearance, preventing unwanted color changes, which do occur with formaldehyde when used in excess or when poorly perfused.

This composition is suitable for being used in the funerary field, whether in funeral homes or in forensic anatomy services, with the advantage that since it does not comprise formaldehyde in its composition, it can be used with absolute safety by employees in this field.

Preferably, the method of manufacturing the composition object of the invention comprises the following steps:
(a) dissolving 2.3 to 2.5% by weight of hexamethylenetetramine at between 10 and 15% by weight of distilled water, and gently stirring, preferably from 100 to 200 rpm, for 30 seconds to 1 minute until the hexamethylenetetramine is completely dissolved in the distilled water;
(b) dissolving 1.4 to 1.6% by weight of pure glycerin soap diluted in a double boiler at between 5 and 10% by weight of distilled water, and gently stirring, preferably from 100 to 200 rpm, for 4 to 7 minutes until the glycerin is completely dissolved in the distilled water;
(c) dissolving from 0.4 to 0.6% by weight of sodium bicarbonate at between 5 and 10% by weight of distilled water, and gently stirring, preferably from 100 to 200 rpm, for 1 to 3 minutes until the sodium bicarbonate is completely dissolved in the distilled water;
(d) mixing all the products obtained in steps a), b), c);
(e) incorporating from 11.3 to 12.1% by weight of ethyl alcohol to the mixture obtained in step d);
(f) and incorporating distilled water until reaching 100%, giving rise to the claimed composition.

Furthermore, the glycerin soap water bath can be placed at a temperature of between 50°C and 250°C, but in no case would it exceed 290°C to prevent the glycerin from boiling.

It should be pointed out that in order to correctly obtain the composition object of the invention, it is necessary for each of the solid components to be completely dissolved in distilled water, obtaining a dilution thereof, and subsequently being mixed correctly, giving rise to the claimed composition.

Also an object of the invention is the use of the claimed composition for the preservation of corpses, preservation in the context of the present patent application being understood as the use of the composition for the conditioning or disinfection of corpses. On the one hand, the conditioning of corpses refers to the set of techniques which have the object of giving the skin of the corpse a "natural" appearance, and to delay the putrefaction process of the tissues of the body of the deceased. Furthermore, the use of the claimed composition as a disinfectant refers to all the techniques which have the object of preventing the proliferation of bacteria, fungi and other microorganisms known in the state of the art which are responsible for the putrefaction of corpses.

In a preferred embodiment, the use of the claimed composition for the preservation of corpses is applied on external and/or internal tissues and/or in internal cavities, mucosae and/or external orifices of the corpses.

In a preferred embodiment, the claimed composition can be applied on the outer surface of the body of the deceased in order to protect it from the microorganisms responsible for the putrefaction mentioned above, while at the same time it gives the skin a visually pleasing appearance. Furthermore, in another preferred embodiment, the present composition can also be applied inside the cavities of the body, to prevent the process of putrefaction and degradation in the internal tissue, preventing bad smells and bloating, which are effects characteristic of the putrefaction of corpses.

In a preferred embodiment, the use of the composition object of the composition is applied to the mucosae and orifices of the body by means of packing with a piece of cotton soaked in the claimed composition of orifices, which can be the mouth, ear canals, nasal passages, trachea, vagina and anus.

Furthermore, said use also comprises the disinfection of the surface of the body by means of distributing the composition object of the invention over said surface.

In a preferred embodiment of the present invention, the use of the composition object of the invention is applied to internal cavities by means of the use of a clinical trocar. To that end, fluids and gases are removed from the internal cavities, and more preferably from the abdominal and chest cavity, and next a suitable amount of the conditioning composition is perfused by means of clinical trocar for the purpose of disinfecting said internal cavities, thereby preventing the proliferation of bacteria and fungi in the hours following the perfusion.

In the context of the present application, the suitable amount which is applied to the internal cavities of the corpse depends on the weight and on the condition of the body and the maintenance conditions applied from the time of death until arriving at the facilities where embalming is performed. Normally, between 0.750 and 1.5 litres are used in an adult body.

With this process, not only is the disinfection of tissues achieved, but it has also been found that the body does not experience the main internal and/or external decomposition phenomena for up to 96 hours, and in a preferred embodiment, this period was surpassed, up to a maximum of 120 hours.

In a preferred embodiment of the present invention, when perfusion of the composition object of the invention is applied on the surface of the corpse and orifices, the decomposition time is delayed from a minimum of 48 hours up to a maximum of 96 hours, which is fairly surprising with respect to the time that decomposition of corpses is delayed with the use of commercial solutions based on formol which do not normally exceed 72 hours.

The present composition is highly effective for the first stage of decomposition of a corpse caused by the hydrolysis of the tissues and the proliferation of bacteria both on the inside and outside, most corpses do not require being preserved for a period exceeding 96 hours, as established under the Mortuary Sanitary Law, international repatriations or by indication issued by the corresponding health or legal authority, since such prolonged periods are for exceptional cases such as repatriation or forensic studies of different aetiology, such as criminology or university studies, for example.

Taking into account that the present composition presents an efficacy that exceeds this maximum period of 96 hours, the claimed composition is the best solution for the treatment of corpses which do not require exceeding the mentioned period of 96 hours, covering up to 98% of corpses treated in a national funeral home, combined with the fact that due to the absence of formaldehyde, it can be used by any funerary employee not specially trained to handle toxic products.

The main advantages derived from the properties of the claimed composition are the following:
- first, use of formaldehyde in the funerary field is prevented, thereby preventing exposure to toxic agents for both employees in this field and for third persons such as friends or family of the deceased;
- furthermore, it presents an efficacy rate that is significantly higher than that of commercial products with a formic base, with hydrating and refreshing properties, which is particularly advantageous compared to other commercial products;
- moreover, it was also found that with certain preservation characteristics, such as temperatures less than 8 degrees, the product is capable of preserving the corpse for a period exceeding 96 hours;
- additionally, the use thereof is easy compared to other commercial products, since as a result of its fluid state, it is much easier to distribute on the outer surface of the body, to pack in orifices, and to perfuse into internal cavities by means of a trocar;
- moreover, since it does not comprise formaldehyde in its composition, it offers the possibility of auxiliary or support personnel who still have not been specially trained in handling toxic substances to perform corpse conditioning techniques using the present composition as it does not contain formaldehyde; and
- finally, the use of the present composition constitutes economic savings for companies offering funerary services, since commercial compositions are more expensive compared to the components that are part of the composition object of the invention.

### Preferred embodiment of the invention

Although the general formulation of the composition object of the invention was described above, a series of particular or preferred embodiments are described below, which have proven to be particularly effective for the preservation of corpses.

In this manner, in a particular embodiment of the invention the composition for the preservation of remains consists of:
(a) 1,209 grams of ethyl alcohol;
(b) 250 grams of hexamethylenetetramine;
(c) 150 grams of pure glycerin soap;
(d) 50 grams of sodium bicarbonate;
(e) and distilled water in the amount required to reach a total volume of 10 litres of the formulation.

In another particular embodiment of the invention, the composition for the preservation of remains consists of:
(a) 1,131 grams of ethyl alcohol;
(b) 235 grams of hexamethylenetetramine;
(c) 140 grams of pure glycerin soap;
(d) 40 grams of sodium bicarbonate;
(e) and distilled water in the amount required to reach a total volume of 10 litres of the formulation.

The method of manufacturing the composition object of the invention described in the two embodiments above was the same in both cases. In this manner, as described in the section on the general description of the invention, said method was characterised by comprising the following steps:
(a) dissolving hexamethylenetetramine in 1 litre of distilled water, and gently stirring at 180 rpm for 1 minute until the sodium bicarbonate is completely dissolved in distilled water;
(b) dissolving pure glycerin soap diluted in a double boiler at 95 °C in 1 litre of distilled water, and stirring at 180 rpm for 6 minutes until the sodium bicarbonate is completely dissolved in the distilled water;
(c) dissolving sodium bicarbonate in 0.5 litres of distilled water, and at 180 rpm for 2 minutes until the sodium bicarbonate is completely dissolved in distilled water;
(d) mixing all the components obtained in the steps a), b), c);
(e) incorporating ethyl alcohol into the mixture obtained in step d);
(f) and incorporating distilled water until reaching a final volume of 10 litres.

Next, the efficacy of the composition object of the invention described in the two embodiments above was tested, demonstrating 100% effectiveness as a corpse-preserving agent for up to a total of 96 hours.

## Claims

1. A composition for the preservation of corpses, **characterised in that** it consists of, in percentage by weight:
(a) from 2.3 to 2.5% of hexamethylenetetramine;
(b) from 1.4 to 1.6% of pure glycerin soap;
(c) from 0.4 to 0.6% of sodium bicarbonate;
(d) from 11.3 to 12.1 % of ethyl alcohol;
(e) and distilled water in the amount required to reach 100% of the formulation.

2. A use of the composition according to claim 1, as a corpse-preserving agent for a maximum time of 96 hours from the time of death.

3. The use of the composition according to claim 2, as a corpse conditioner.

4. The use of the composition according to claim 2, as a corpse disinfectant.

5. The use of the composition according to any one of claims 2 to 4, wherein the composition is applied to prevent the proliferation of bacteria, fungi and other microorganisms responsible for putrefaction processes.

6. The use of the composition according to any one of claims 2 to 5, wherein the composition is applied on external tissues and/or internal tissues and/or in cavities and/or mucosae and/or orifices of the corpse.

7. The use of the composition according to claim 6, wherein when the composition is applied to orifices and/or mucosae by packing using a piece of cotton soaked in the composition, the orifices that are selected are from the group consisting of the mouth, ear canals, nasal passages, trachea, vagina and anus.

8. The use of the composition according to claim 6, wherein when the composition is applied by perfusion using a clinical trocar in the previously emptied internal cavities.

9. A method of manufacturing the composition according to claim 1, **characterised in that** it comprises the following steps:
(a) dissolving from 2.3 to 2.5% by weight of hexamethylenetetramine at between 5 and 10% by weight of distilled water, and stirring at between 100 and 200 rpm, for 30 seconds to 1 minute;
(b) dissolving from 1.4 to 1.6% by weight of pure glycerin soap diluted in a double boiler at between 10 and 15% by weight of distilled water, and stirring at between 100 and 200 rpm, for 4 to 7 minutes;
(c) dissolving from 0.4 to 0.6% by weight of sodium bicarbonate at between 5 and 10% by weight of distilled water, and stirring at between 100 and 200 rpm, for 1 to 3 minutes;
(d) mixing all the products obtained in steps a), b), c);
(e) incorporating from 11.3 to 12.1% by weight of ethyl alcohol to the mixture obtained in step d); and
(f) incorporating distilled water until reaching 100%.

## Patentansprüche

1. Zusammensetzung zur Konservierung von Leichen, **dadurch gekennzeichnet, dass** sie, in Gewichtsprozent, besteht aus:
(a) 2,3 bis 2,5 % Hexamethylentetramin;
(b) 1,4 bis 1,6 % reiner Glycerinseife;
(c) 0,4 bis 0,6 % Natriumbicarbonat;
(d) 11,3 bis 12,1% Ethylalkohol
(e) und destilliertem Wasser in der Menge, die erforderlich ist, um 100% der Formulierung zu erreichen.

2. Verwendung der Zusammensetzung gemäß Anspruch 1 als Mittel zur Leichenkonservierung für eine maximale Zeit von 96 Stunden ab dem Zeitpunkt des Todes.

3. Verwendung der Zusammensetzung gemäß Anspruch 2 als Aufbereitungsmittel für Leichen.

4. Verwendung der Zusammensetzung gemäß Anspruch 2 als Mittel zur Leichendesinfektion.

5. Verwendung der Zusammensetzung gemäß einem der Ansprüche 2 bis 4, wobei die Zusammensetzung angewendet wird, um die Proliferation von Bakterien, Pilzen und anderen Mikroorganismen zu verhindern, die für Fäulnisprozesse verantwortlich sind.

6. Verwendung der Zusammensetzung gemäß einem der Ansprüche 2 bis 5, wobei die Zusammensetzung auf äußeren Geweben und/oder inneren Geweben und/oder in Hohlräumen und/oder Schleimhäuten und/oder Körperöffnungen der Leiche angewendet wird.

7. Verwendung der Zusammensetzung gemäß Anspruch 6, wobei, wenn die Zusammensetzung durch Aufpacken unter Verwendung eines in der Zusammensetzung eingeweichten Stücks Baumwolle auf Körperöffnungen und/oder Schleimhäuten angewendet wird, die Körperöffnungen, die ausgewählt sind, aus der Gruppe stammen, bestehend aus dem Mund, den Gehörgängen, den Nasengängen, der Luftröhre, der Vagina und dem Anus.

8. Verwendung der Zusammensetzung gemäß Anspruch 6, wobei, wenn die Zusammensetzung durch Perfusion angewendet wird, diese unter Verwendung eines klinischen Trokars in den zuvor entleerten inneren Hohlräumen angewendet wird.

9. Verfahren zum Herstellen der Zusammensetzung gemäß Anspruch 1, **dadurch gekennzeichnet, dass** es die folgenden Schritte umfasst:
(a) Auflösen von 2,3 bis 2,5 Gew.-% Hexamethylentetramin bei zwischen 5 und 10 Gew.-% destilliertem Wasser und Rühren über 30 Sekunden bis 1 Minute hinweg bei zwischen 100 und 200 U/min;
(b) Auflösen von 1,4 bis 1,6 Gew.-% reiner Glycerinseife, verdünnt in einem Doppelkessel bei zwischen 10 und 15 Gew.-% destilliertem Wasser, und Rühren über 4 bis 7 Minuten hinweg bei zwischen 100 und 200 U/min;
(c) Auflösen von 0,4 bis 0,6 Gew.-% Natriumbicarbonat bei zwischen 5 und 10 Gew.-% destilliertem Wasser und Rühren über 1 bis 3 Minuten hinweg bei 100 bis 200 U/min;
(d) Mischen aller in den Schritten a), b), c) erhaltenen Produkte;
(e) Einarbeiten von 11,3 bis 12,1 Gew.-% Ethylalkohol in die in Schritt d) erhaltene Mischung; und
(f) Einarbeiten von destilliertem Wasser bis zum Erreichen von 100 %.

## Revendications

1. Composition pour la conservation de cadavres, **caractérisée en ce qu'**elle consiste en, en pourcentage en masse :
(a) de 2,3 à 2,5 % d'hexaméthylènetétramine ;
(b) de 1,4 à 1,6 % de savon de glycérine pure ;
(c) de 0,4 à 0,6 % de bicarbonate de sodium ;
(d) de 11,3 à 12,1 % d'alcool éthylique ;
(e) et de l'eau distillée dans la quantité nécessaire pour atteindre 100 % de la formulation.

2. Utilisation de la composition selon la revendication 1, comme un agent de conservation de cadavres pour une durée maximale de 96 heures à partir du moment du décès.

3. Utilisation de la composition selon la revendication 2, comme un conditionneur de cadavres.

4. Utilisation de la composition selon la revendication 2, comme un désinfectant de cadavres.

5. Utilisation de la composition selon l'une quelconque des revendications 2 à 4, dans laquelle la composition est appliquée pour éviter la prolifération de bactéries, de champignons et d'autres microorganismes responsables de procédés de putréfaction.

6. Utilisation de la composition selon l'une quelconque des revendications 2 à 5, dans laquelle la composition est appliquée sur des tissus externes et/ou des tissus internes et/ou dans des cavités et/ou des muqueuses et/ou des orifices du cadavre.

7. Utilisation de la composition selon la revendication 6, dans laquelle lorsque la composition est appliquée aux orifices et/ou muqueuses par tassement en utilisant un morceau de coton immergé dans la composition, les orifices qui sont choisis sont dans le groupe consistant en la bouche, les conduits auditifs, les voies nasales, la trachée, le vagin et l'anus.

8. Utilisation de la composition selon la revendication 6, dans laquelle la composition est appliquée par perfusion en utilisant un trocart clinique dans les cavités internes préalablement vidées.

9. Procédé de fabrication de la composition selon la revendication 1, **caractérisé en ce qu'**il comprend les étapes suivantes :
(a) dissolution de 2,3 à 2,5 % en masse d'hexaméthylène-tétramine à de 5 à 10 % en masse d'eau distillée, et agitation à de 100 à 200 tr/min, pendant de 30 secondes à 1 minute ;
(b) dissolution de 1,4 à 1,6 % en masse de savon de glycérine pure dilué dans un bain-marie à de 10 à 15 % en masse d'eau distillée, et agitation à de 100 à 200 tr/min, pendant de 4 à 7 minutes ;
(c) dissolution de 0,4 à 0,6 % en masse de bicarbonate de sodium à de 5 à 10 % en masse d'eau distillée, et agitation à de 100 à 200 tr/min, pendant de 1 à 3 minutes ;
(d) mélange de tous les produits obtenus dans les étapes a), b), c) ;
(e) incorporation de 11,3 à 12,1 % en masse d'alcool éthylique au mélange obtenu dans l'étape d) ; et
(f) incorporation d'eau distillée jusqu'à atteindre 100 %.
